# EUROPEAN PATENT APPLICATION

(11) **EP 1 858 269 A1**
(43) Date of publication of application: **21.11.2007**
(21) Application number: 05720187.3
(22) Date of filing: 07.03.2005
(51) Int. Cl.: H04Q 7/22, H04L 12/56, H04Q 7/38

(54) **WIRELESS COMMUNICATION SYSTEM**

(71) Applicant: National Institute of Information and Communicatons Technology, Koganei-shi Tokyo 184-8795 (JP)
(72) Inventor: HASEGAWA, Mikio, National Inst. of Inf. and Comm.Technology, Tokyo 184-8795 (JP); INOUE, Masugi, National Inst. of Info.and Comm.Technology, Tokyo 184-8795 (JP)
(74) Representative: Chettle, Adrian John
(86) International application number: PCT/JP2005/003915
(87) International publication number: WO 2006/095404

(57) **Abstract**

Wireless communication system includes wireless communication terminal, basic access network terminal and network server and the basic access network terminal and wireless communication terminal have a communication path. This configuration provides simple, smooth hand over technology between different kinds of networks and hand off technology for hand off of service between terminals located nearby physically and further wireless communication system which integrates these.

## Description

### Technical field

The present invention relates to technology which enables different wireless communication networks to be switched continuously when executing data communication using two or more kinds of the wireless communication networks. Particularly, the present invention relates to technology concerning a configuration for realizing hand over of network and hand off of service.

### Background art

Currently, a variety of wireless communication networks for use for practical purposes today such as independent operating system such as wireless LAN, Bluetooth and public network system such as mobile phone and PHS, function independently while user uses them selectively depending on application, area and communication velocity.
These wireless communication networks are diversified in communication velocity, providing area and communication cost depending on their kinds and need to be switched appropriately corresponding to a place in which that network is connected without always using a particular network.
At this time, there has been demanded seamless hand over technology which handles respective systems integrally and changes over the network by selecting an appropriate network without making user conscious thereof depending on coverage of each service area and communication band which user needs while continuing communication without interruption.

For example, although mobile IP service has been proposed, introduction or prevalence thereof has not been progressed. The reason is considered to be that Internet service provider needs to install a server such as a home agent (HA) in order to achieve mobile IP and further that cost is required to secure fault tolerance, reliability and large capacity of the server because it is to be controlled centrally.

Further, unless IP subnet is changed when user moves between the Internet service providers while continuing home agent communication, the mobile IP service cannot be used effectively and thus, currently, it has been used only in roaming.
Further, the reason why the prevalence has not been progressed can be considered to be also that there are few Internet applications which need mobile communication.

As specific products currently provided, following ones can be mentioned. One of them is family of products called home server or personal server. Currently, Internet access through xDSL or FTTH has increased and these modems are placed at a number of homes. Thus, provision of additional service by adding a function to the modems has been attempted.
Currently marketed home servers are loaded with broadband router function, wireless LAN access point function, file server, print server, web server or mail server. Some types are provided with a function of distributing capture TV pictures and accumulated pictures to PC so that user can see the pictures from apart from home.

However, these servers have no function of IP phone or no function of presence for controlling communication corresponding to the condition of a terminal side.
Further, no network hand over function or service hand over function has been provided. That is, those servers aim at only home network and a function of switching an appliance while continuing communication within its internal network or switching of communication to an external network side while continuing communication has not been expected.

As a similar product, xDSL modem contained broadband router is available. These are provided by xDSL service providers and includes wireless LAN access point function and IP telephone function prepared. This enables only a conventional telephone to be connected for use, so that it has been used for only the reason of cheap communication cost.
It cannot transmit sound or video communication to any cordless handset or PC in the form of IP data making the best use of original characteristics of the IP phone. Likewise, it cannot transfer sound / video communication received from outside to any appliance on the external network as well as an internal appliance. The aforementioned presence function is not provided.

Further, a server for realizing the mobile IP has been provided. These install home agent servers on corporate network of companies as well as Internet service providers. When a server for controlling collectively goes down, all users are influenced. Although the mobile IP is capable of network hand over across a sub-net, hand over between terminals has not been achieved.
Further, the presence server has been provided and if this server goes down, all users are influenced because it controls presence information of each user collectively. There is a problem that some users may have feeling of dislike thereto from viewpoints of privacy protection.

This inventor has proposed a variety of methods for achieving hand over between networks and hand off of service through patent documents 1 to 3.

Patent document 1: PCT/JP03/14727
Patent document 2: PCT/JP03/14724
Patent document 3: PCT/JP03/14723

The patent document 1 has proposed a wireless communication system which establishes basic access network and wireless access network at the same time using at least two or more kinds of wireless communication networks. While the basic access network carries out signaling communication concerned with continuous communication switching control, the wireless access network carries out other data communication than signaling communication. According to this system, continuous network switching can be achieved by setting multi-cast of feeding data to the basic access network temporarily.

The patent document 2 has proposed technology which enables switching to an optimum network by sending position information to a server with a position acquiring means equipped on a wireless communication terminal in the same configuration as the above-described wireless system.

The patent document 3 has proposed a method for signaling communication for acquiring network information available based on position information of a terminal in order to realize continuous communication switching in the basic access network and a communication based on SIP (Session Initiation Protocol) which carries out exchange of subscription request signals between the terminals and negotiation about communication in the same configuration as the above-described wireless system. This configuration enables peer-to-peer connection by media application between the terminals.

Although each of these systems aims at solving problems of a family of current products, both functions of the hand over between networks and service hand off have been controlled by independent terminals, so that the both cannot be activated integrally.

### Disclosure of the invention

The present invention intends to solve the problems of the above-described conventional technologies and provides simple, smooth hand over technology between different networks and service hand of f technology between terminals located nearby physically. Further, the present invention aims at integrating these.

To solve the above-described problems, the present invention proposes communication switching control at the wireless communication terminal using services by executing signaling communication using the basic access network terminal which user always carries while making the best use of the basic access network proposed conventionally. Thus, a network server for communicating with the basic access network terminal and wireless communication terminal is provided.

More specifically, the present invention provides a wireless communication system capable of establishing connection of basic access network capable of signaling communication concerned with continuous communication switch control and access network for carrying out other data communication than the signaling communication, at the same time, using at least two or more kinds of communication networks including wireless communication network. The wireless communication system includes wireless communication terminal, basic access network terminal and network server.

Then, the wireless communication terminal includes: access communication processing unit capable of communication with at least two or more kinds of communication networks including the wireless communication network; each network device corresponding to each communication network; a passage and device for communication with the basic access network terminal; and basic access network client processing unit having client function in signaling communication concerning connection / disconnection processing request to at least the access network obtained through the communication passage.
Near distance wireless communication system such as Bluetooth is preferable as a communication passage and private area network (PAN) is constructed between the wireless communication terminal and the basic access network terminal.

The network server includes: control information database having user information and device information concerning the basic access network terminal; and basic access network server processing unit which controls the signaling communication concerning communication control containing registration / updating processing of at least the basic access network terminal with the basic access network terminal when switching communication of the access network continuously.

The basic access network terminal includes basic access network signaling processing unit which carries out the signaling communication with the basic access network server processing unit of the network server and the basic access network client processing unit at the wireless communication terminal and device control unit which at least controls the communication device.

An invention described in claim 2 provides IP based seamless hand over by loading the network server with the home agent function of the mobile IP.
That is, the network server is equipped with a packet relay processing unit which is capable of communicating with the wireless communication terminal using the access network and relays data stream packet transmitted to the wireless communication terminal. At the same time, the wireless communication terminal has a seamless signal processing unit for receiving a packet through a packet relay processing unit of network server at the time of communication of the access network and switches the communication continuously on IP level.

According to the conventionally proposed technology, a special terminal is provided for service hand off to find out any terminal by means of Bluetooth or proxy is set up preliminarily for use. Because in the present invention, finding of any terminal is carried out by the network server and basic access network terminal, the proxy can be started up dynamically by providing service hand off as an application.

As a configuration for this, the configuration of claim 3 is further provided with service control communication unit for communicating with the basic access network server processing unit of the network server and service relay processing unit which, when communicating arbitrary service information such as sound and image in the wireless communication system, relays the information with a service providing terminal which starts up the service, in the network server.
The service relay processing unit sets up service providing terminal database which holds information of the service providing terminal, application at least for use with reference to the service providing terminal database / parameter / communication method to be conveyed to the application and communicates control information to the service providing terminal based on a request concerning at least startup / stop / relay of the service obtained by the service control communication unit.

The configuration of claim 4 provides a configuration in which a service relay terminal is disposed on the network without placing it in the network server. This is different in that it is disposed dynamically so that it can be started or stopped although it is similar to the conventional configuration.

Further, the present invention provides a method for achieving peer-to-peer communication in order to provide a service such as communication.
That is, the invention of claim 5 proposes a configuration for communication based on SIP (Session Initiation Protocol) which carries out exchange of subscription request signal and negotiation about communication with wireless communication terminal and other terminal using the wireless communication system.
The basic access network terminal is provided with SIP client processing unit for sending position information to be acquired from position information acquisition unit controlled by at least the device control unit and signaling information acquired from the basic access network signaling processing unit and at the same time, the network server is provided with SIP relay processing unit which transmits each information to the SIP client processing unit of other terminal.

Although in the above-described wireless communication system, the basic access network terminal and the wireless communication terminal are provided separately and connected to each other through a communication passage, they may be constructed integrally so that the communication passage may be connected directly inside.

The present invention provides the above-described wireless communication system and further may provide a basic access network terminal and a single unit of the network server which constitutes the system. These may use Internet connection through plural passages such as wireless LAN and wired LAN as the wireless communication system. Further, existing public network such as mobile phone and PHS is preferably used as the basic access network.

The above-described invention exerts following effects.
Because the mobile IP home agent function is distributed to each server by disposing the network servers of the present invention to each home and company, the problem of the concentrated control type can be solved.
Further, because the presence information of users is processed between the basic access network terminal and the network server, the network side does not need to be notified and thus privacy protection and distribution of processing load can be achieved.

Accordingly, the invention can provide hand over function of switching communication appliances while continuing communication by control from the basic access network terminal and service hand off at the same time. Consequently, the largest problem of the present invention can be solved.
For example, with communication arriving at an appliance belonging to a network server placed on home network, communication dispatched from that appliance and service continued, the appliance may be moved from the home network to an external network or between a plurality of external networks.

### Brief description of the drawings

FIG. 1 is an entire configuration diagram of communication system according to the present invention;
FIG. 2 is a configuration diagram of network server according to the present invention;
FIG. 3 is a configuration diagram of mobile terminal according to the present invention;
FIG. 4 is a configuration diagram of a mobile PC of the present invention;
FIG. 5 is a sequence showing authentication of a mobile terminal (20) in network server (10);
FIG. 6 is a sequence of building up of PAN;
FIG. 7 is a sequence for starting the service without use of a relay server;
FIG. 8 is a sequence for starting the service using the relay server;
FIG. 9 is a sequence for hand off of the service without use of the relay server;
FIG. 10 is a sequence for transmission from a mobile PC in SIP communication;
FIG. 11 is a sequence for shutting down after transmission from the mobile PC in SIP communication; and
FIG. 12 is a sequence for hand off of communication from the mobile PC in SIP communication.

### Description of reference numerals

1: communication system, 10: network server, 2 0: mobile terminal, 30: mobile PC, 40: fixed terminal

### Best mode for carrying out the invention

Hereinafter, the embodiment of the present invention will be described with reference to the drawings. Upon carrying out of the invention, the embodiments are not restricted to following but may be modified or applied arbitrarily.

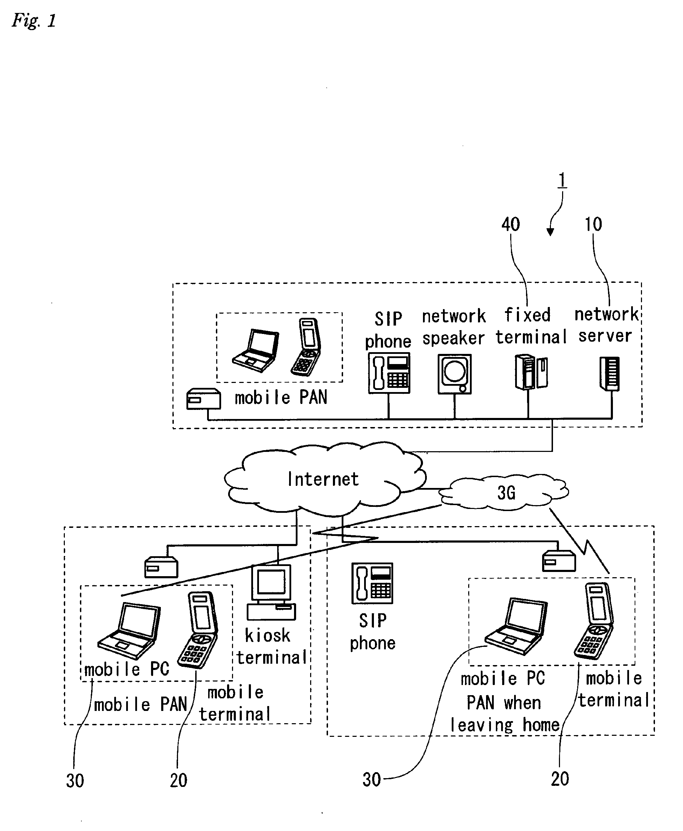

FIG. 1 is an overall view of wireless communication system (1) of the present invention. This system is constituted of basically a network server (10) for realizing ubiquitous wireless communication environment, basic access network terminal (hereinafter, referred to as mobile terminal) (20) and wireless communication terminal (hereinafter referred to as mobile PC) (30).

The network server (10) is connected to a network through wired LAN. It controls mainly signaling communication to be connected from mobile terminal (20) through basic access network and SIP relay processing.
When a position acquisition request is made from the mobile terminal (20), the position of each mobile terminal (20) is specified from information of wireless LAN access point and provided.
At the same time, hard disk of the server includes database, which holds user information, mobile terminal (20) information and access authority information.

The mobile terminal (20) is a terminal device supposed to be always carried in a single quantity by a single person. Currently, the mobile phone has been prevalent and it is preferable to load this function on the mobile phone.
The mobile terminal (20) constitutes the network server (10) and basic access network with, for example, 3G and wireless LAN so that it is always connected.

The mobile PC (30) is constituted of a notebook personal computer which corresponds to a mobile terminal (20) only one to one. According to the present invention, the communication system includes at least wireless communication system and is provided with communication means such as wireless LAN device and PHS network different from the basic access network. At the same time, it may possess wired LAN and when it is available, the wired LAN may be used as access network.
Further, communication passage with a mobile terminal such as Bluetooth and wireless LAN is provided. Consequently, the signaling communication is carried out through the communication passage.

It is presumed that the mobile PC (30) moves together with user and the position of the mobile terminal is handled as a position of the mobile PC. Thus, because no signaling communication is carried out while it is not connected to the mobile terminal, the wireless communication of the present invention is not actuated.

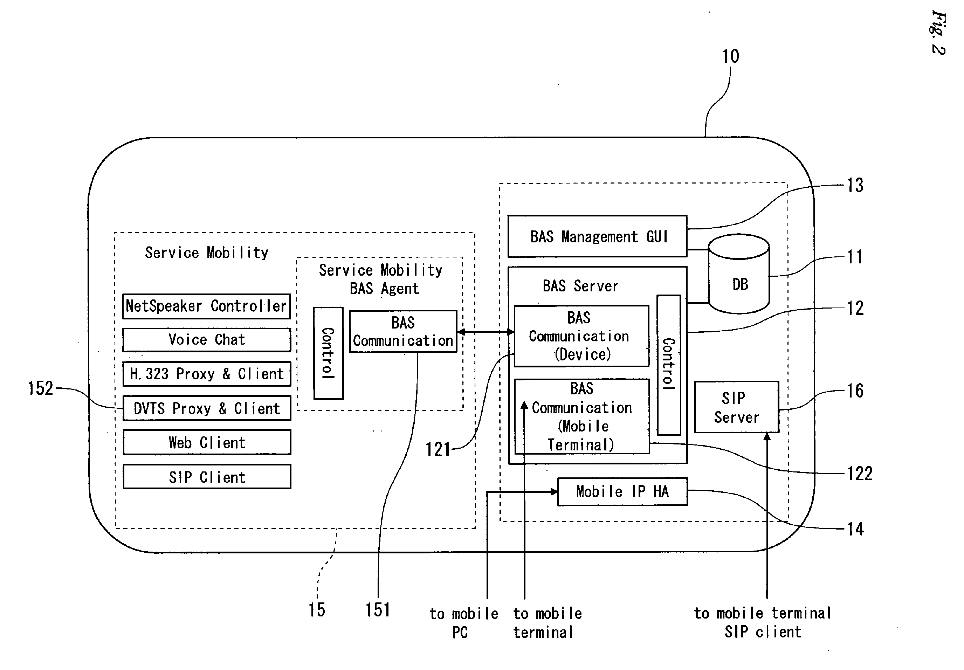

An operation of each node in the communication system (1) will be described in detail. FIGS. 2 to 4 are configuration diagrams of the network server (10), the mobile terminal (20) and the mobile PC (30) of the present invention.
The network server (10) includes a management information database (11) having user information and device information concerning the user information and basic access network terminal and basic access network server processing unit (12) for carrying out communication processing of the basic access network.

Further, user interface (13) for management of the basic access network is provided. Setting by the interface is stored in the hard disk (11).
Communication device (121) with 3G network and communication processing unit (122) for carrying out signaling communication with the communication device (121) are disposed in the basic access network server processing unit (12) so as to enable communication with the mobile terminal (20).

Mobile IP agent (14) is provided as a packet relay processing unit which is capable of communicating with a wireless communication terminal using an access network and relays a data stream packet to be transmitted to the wireless communication terminal. Consequently, the mobile PC (30) can carry out IP based continuous seamless communication.

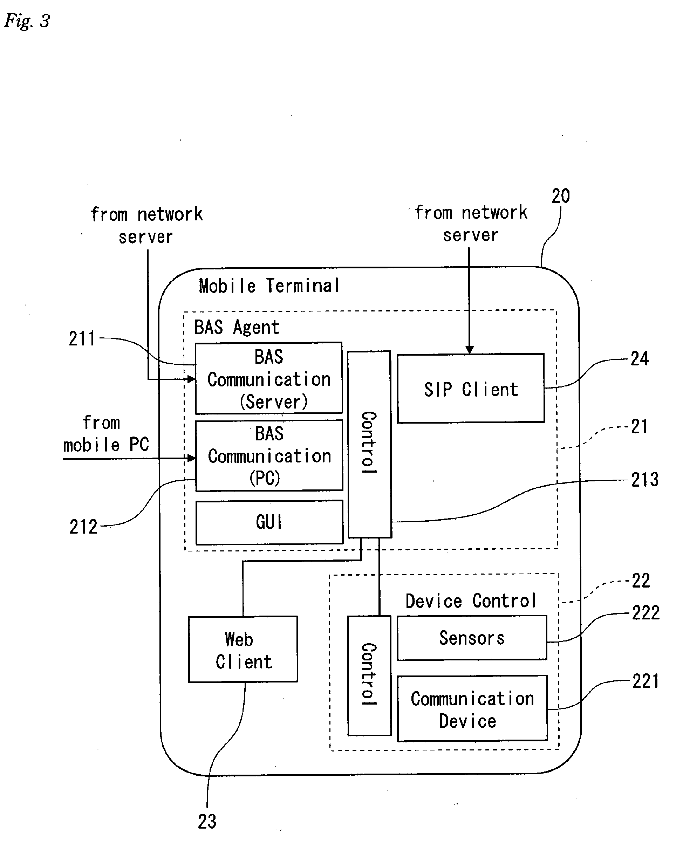

As shown in FIG. 3, the mobile terminal (20) is provided with a basic access network signaling processing unit (21) and a device control unit (22). The basic access network signaling processing unit (21) includes a server communication processing unit (211) which communicates with the basic access network server processing unit (12) of the network server (10) and a mobile PC communication processing unit (212) which carries out PAN communication with the mobile PC (30). These are operated cooperatively under a control unit (213).

The device control unit (22) is provided with a sensor (222) for acquisition of positions of a communication device (221) and terminal. Then, the communication device (221) realizes use of mobile phone by for example 3G. An acceleration sensor, a direction sensor, GPS receiver and the like are provided as sensors (222) in order to acquire a position and direction of user.
Further, the mobile terminal (20) is provided with a web client (23) for access to the web so that the web can be accessed by the terminal.

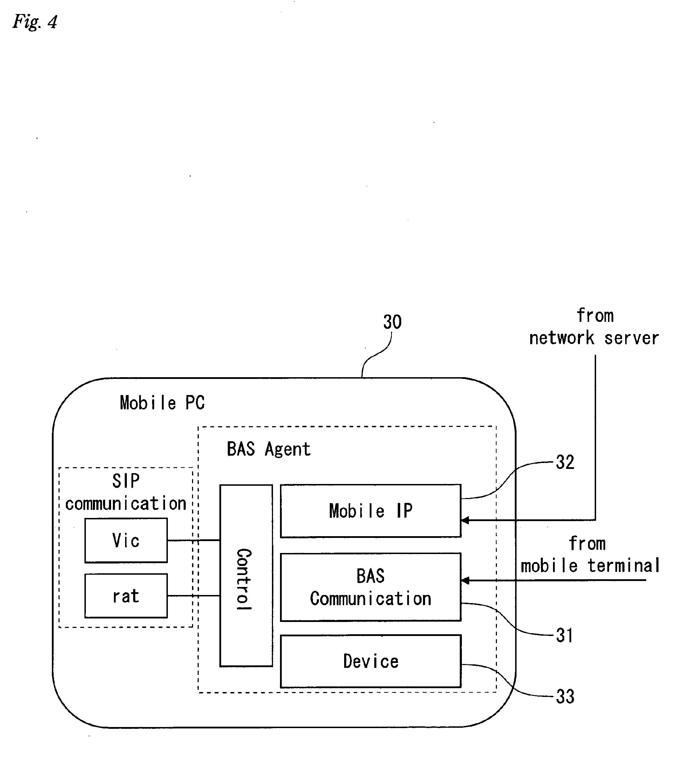

As shown in FIG. 4, the mobile (30) is provided with a PAN communication processing unit (31) which communicates with the basic access network signaling processing unit (21) of the mobile terminal (20). This PAN communication processing unit (31) forms PAN with the mobile PC communication processing unit (212) of the mobile terminal (20) so as to enable transmission of the signaling information. The mobile IP processing unit (32) is connected to the mobile IP agent (14) of network server.
To use the wireless LAN, SSID of an access point is scanned at a specified cycle so as to grasp an available access point and is notified to the mobile terminal (20) through the PAN.
Further, a communication device (33) which constitutes physical layer for connecting with an access network containing a plurality of wireless communication networks is provided.

A specific sequence using the following configuration will be described in detail.

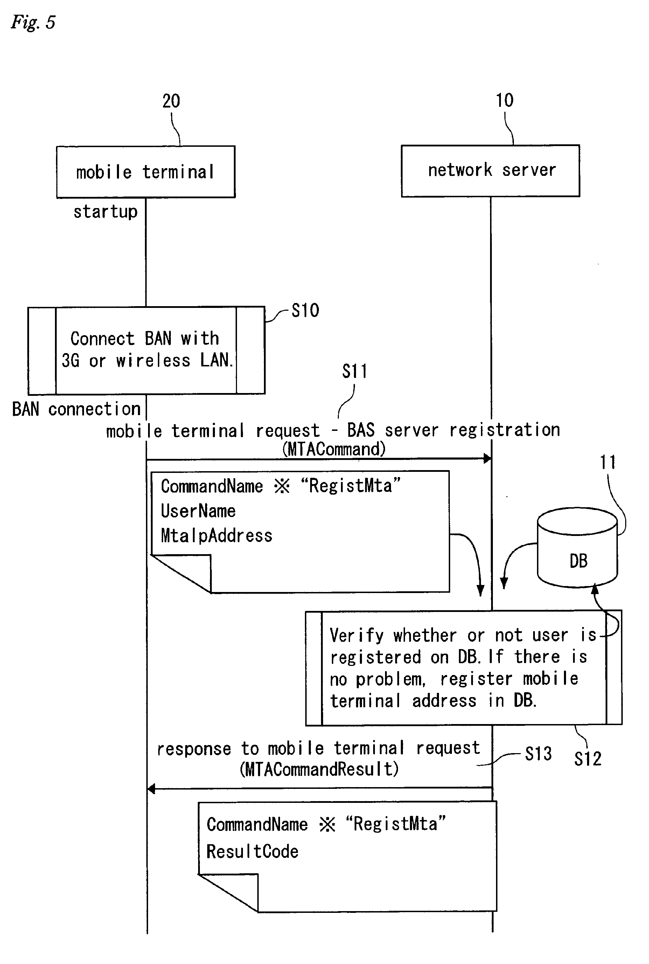

FIG. 5 is a sequence showing authorization of the mobile terminal (20) in the network server (10). When the mobile terminal is started, connecting processing (S10) of the basic access network of the 3G or the like is carried out so as to make address registration request (S11) of the mobile terminal to the network server (10).

The network server (10) verifies whether or not a relevant user has been registered by referring to management information database (11) (S12) and if it has been registered, registers its address on the database (11) . A response to such a request is sent back (S13).

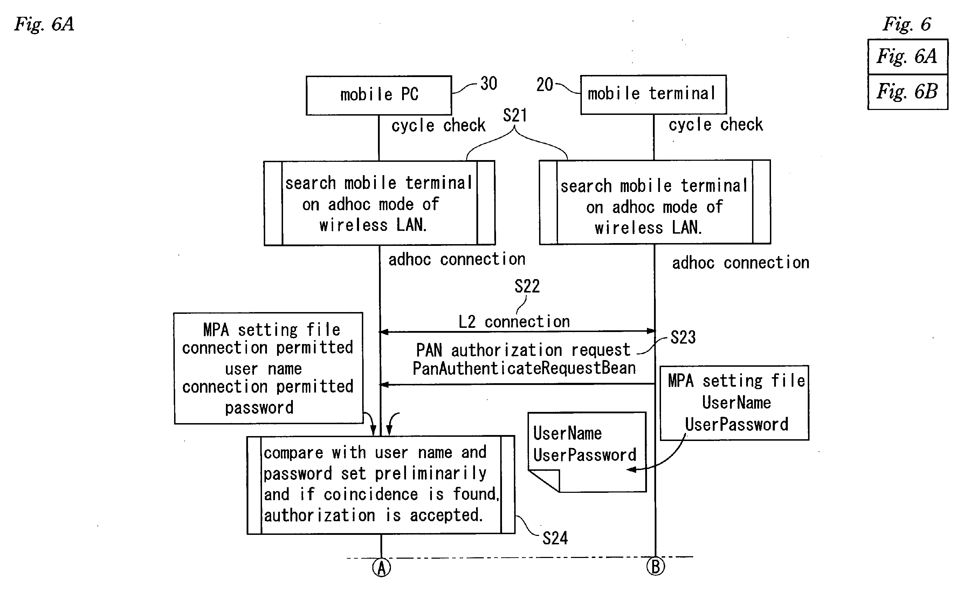

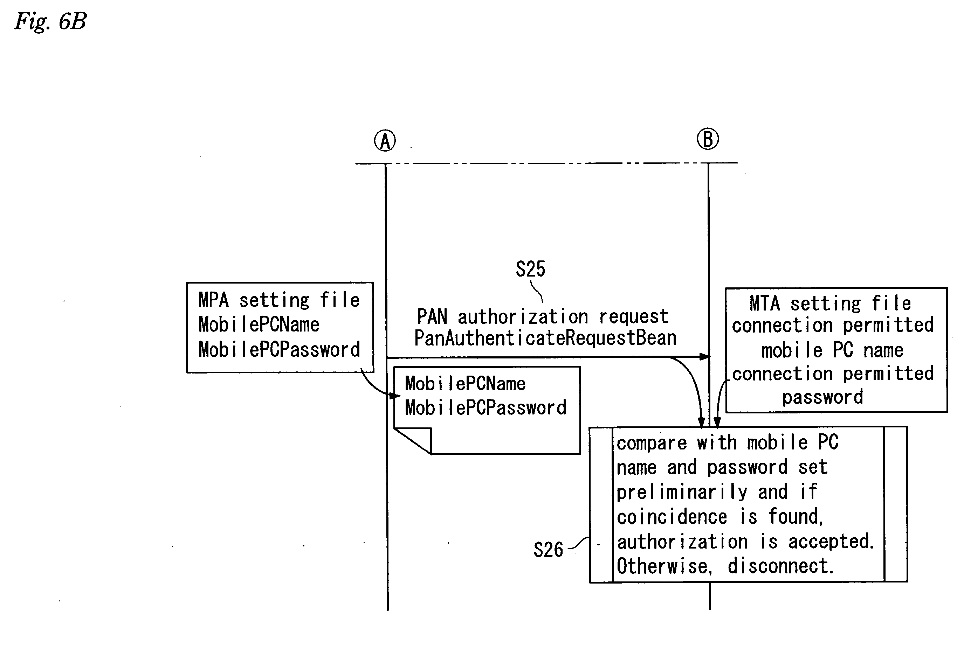

Next, a sequence for PAN establishment between the mobile terminal (20) and the mobile PC (30) is shown in FIG. 6.
According to the present invention, the wireless LAN is started by known adhoc mode on both sides so as to repeat cyclic search (S21) between them.
Then, when finding is made, adhoc connection (S22) is carried out according to a predetermined connection procedure.
After connection is made, PAN authorization request (S23) is made from the mobile terminal (20) so as to send a memorized user name and password to the mobile PC (30).

The mobile PC (30) collates preliminarily set user name and password and only when they meet each other, authorizes (S24) and then, sends back the mobile PC name and password memorized in it together with an authorization result (S25).
After receiving a reply, the mobile terminal (20) collates a mobile PC which permits connection and its password and when they meet each other, authorizes (S26) so that PAN is established. Unless they meet, communication is interrupted.
Confidentiality is enhanced by authorizing between the mobile PC and mobile terminal so as to contribute to improvement of security.

Next, a method of service hand off will be described in detail. The present invention enables a configuration which executes service hand off without using a relay server and a configuration using the same as described above. First, a sequence of service startup in the former will be described.

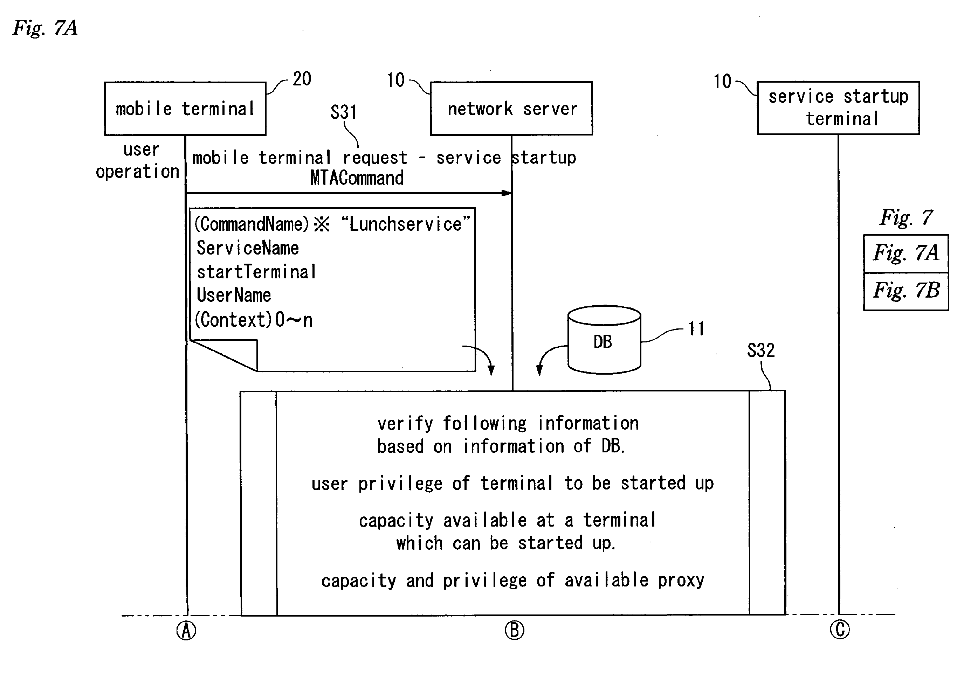

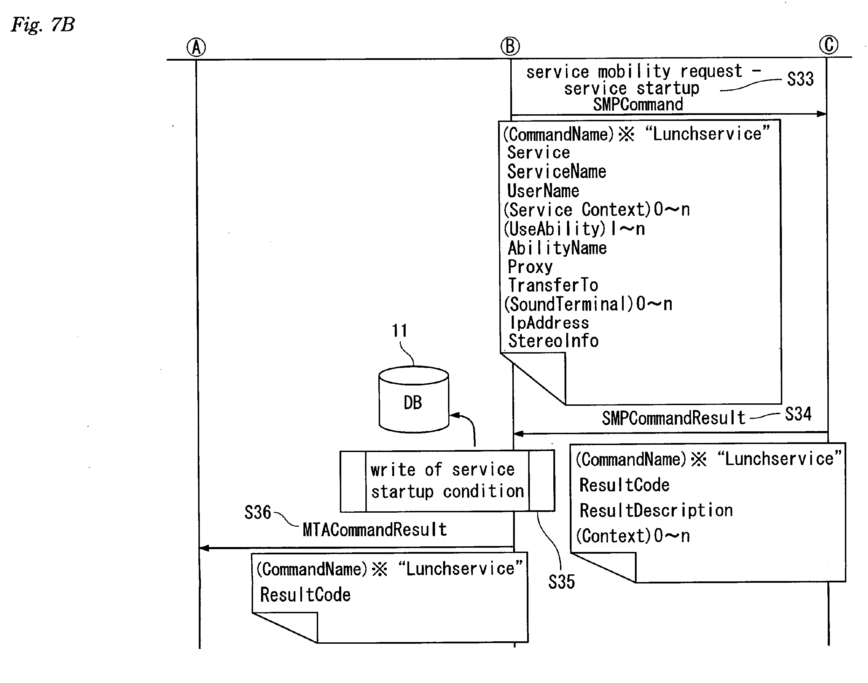

FIG. 7 shows that sequence.

When user executes service startup operation by operating keys of the mobile terminal (20), the mobile terminal (20) sends a service startup request (S31) to the network server (10). Because it is the signaling information, the basic access network is used. Hereinafter, those not described otherwise are signaling information.
To answer a service startup request, a service startup terminal, context information and other user information are transmitted.

In the network server (10), user privilege of a terminal to be started, capacity of a terminal to be started (for example, display capacity, communication velocity and the like) and the like are recognized (S32) by referring to the database (11) and a service startup request (S33) is sent to the designated service startup terminal (40) through communication network.

In the present invention, a variety of terminals are assumed as a service startup terminal. Although this embodiment will be described using for example, a fixed terminal (40) connected through the wired LAN, any terminal may be used if the aforementioned service mobility agent processing function is possessed. For example, the terminal may be connected through not only the wired LAN but also the wireless LAN and SIP phone and a speaker system disclosed in patent document 4 by this inventor may be used as well as desk top personal computer, notebook personal computer, PDA.
Using a mobile PC (30) as a terminal is also an ordinary method.

Patent document 4: PCT/JP03/14721

After the service startup terminal (40) receives a request, the service is started up. It receives data stream from the network server (10) and executes reproduction of animation and sound.
At the same time, it sends back a response (S34) to the network server (10). The network server (10) records that service has been started in the database (11) (S35) and further sends back a relevant response to the mobile terminal (20).

The above described configuration is a case in which the service mobility agent processing function is provided at the service startup terminal (40). As described above, the present invention enables the network server (10) to select a terminal having a plurality of service mobility agent processing functions following the management information database (11).
However, in case of the above-mentioned speaker system, high grade information processing is sometimes difficult to do.
Thus, a terminal having the service mobility agent processing unit may be disposed on the network.

In this embodiment, an example of equipping the network server (10) with this function will be described as an example. Although the configuration will be described more in detail here, the aforementioned fixed terminal (40) has the same configuration as this one. As shown in FIG. 2, a service relay processing unit (15) for realizing the service mobility agent processing function is provided.

The service relay processing unit (15) is provided with a communication unit (151) for communicating with the basic access network server processing unit (12). Further, various kinds of applications (152) for executing a service are provided. In case of executing the service at a fixed terminal or the like having no function of providing information transmitted from a caller or a callee as a service as it is, the service can be executed at that fixed terminal by relaying that information and converting it. In this way, upon conversion of information reproducible by the fixed terminal, it is converted by the application (152) and transmitted to the fixed terminal through communication network.

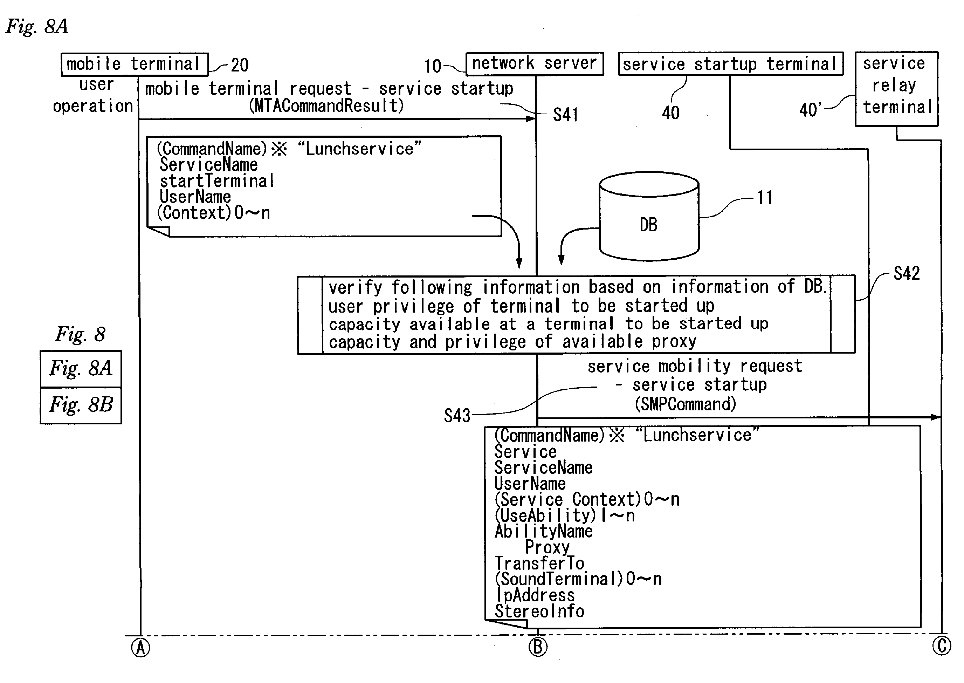

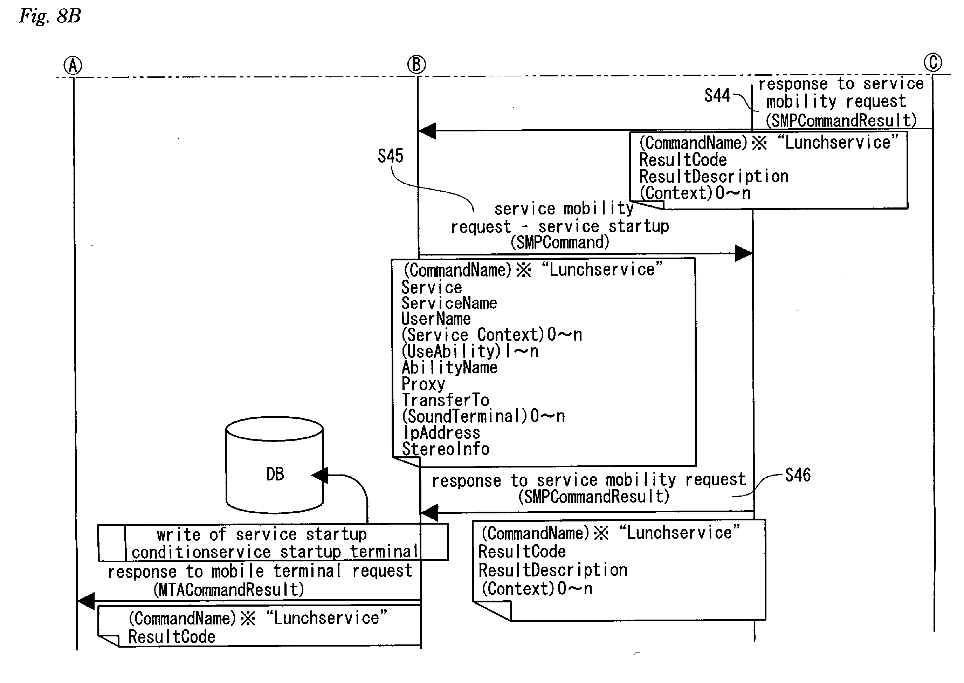

Service startup sequence using the relay server in this way is shown in FIG. 8. When user starts up the service by operating a key or the like on the mobile terminal (20), the mobile terminal (20) sends service startup request (S41) to the network server (10). The network server (10) confirms a user privilege of a terminal to be started up, capacity of the terminal to be started up (for example, display capacity, communication velocity and the like) (S42) and sends the service startup request (S43) to a relay server (40') through communication network.

When the relay server (40') receives the request, it sends back a response (S44) to the network server (10). Further, the network server (10) requests the terminal to be started up to start the service (S45) and the terminal (40) responds to it correspondingly (S46).
The network server (10) records that service has been started in the database (11) (S47) further sends back a relevant response to the mobile terminal (20) (S48).

In the above-described sequence, the fixed terminal (40) to be started up can execute reproduction processing corresponding to its own capacity by receiving converted data stream from the relay server (40').

Stop of the service is carried out by the same processing as service startup (FIG. 7) in any case. That is, service stop request is made instead of the service startup request and the network server (10) records that the service is stopped in the database (11) and terminates it.

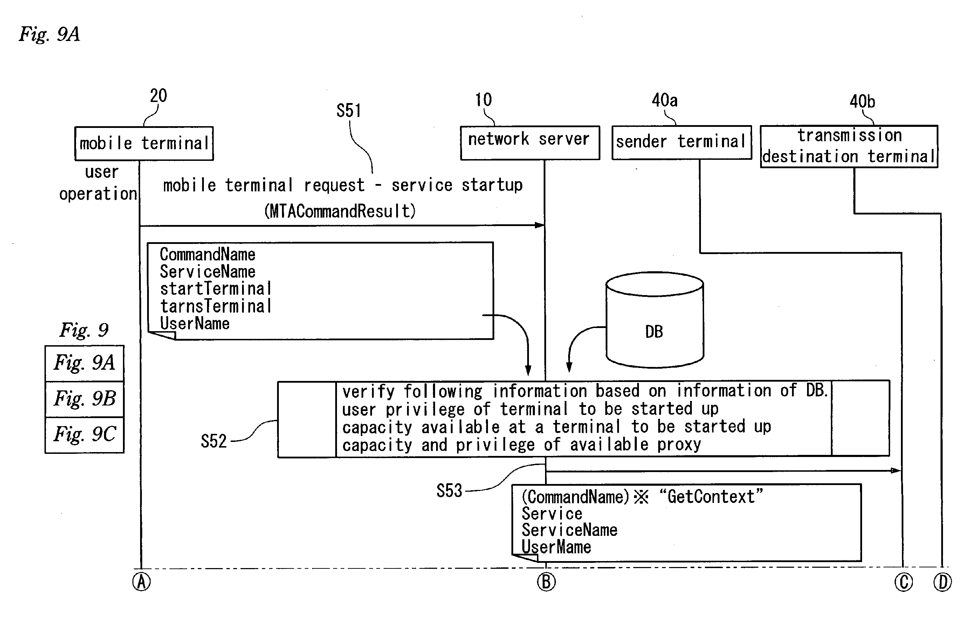

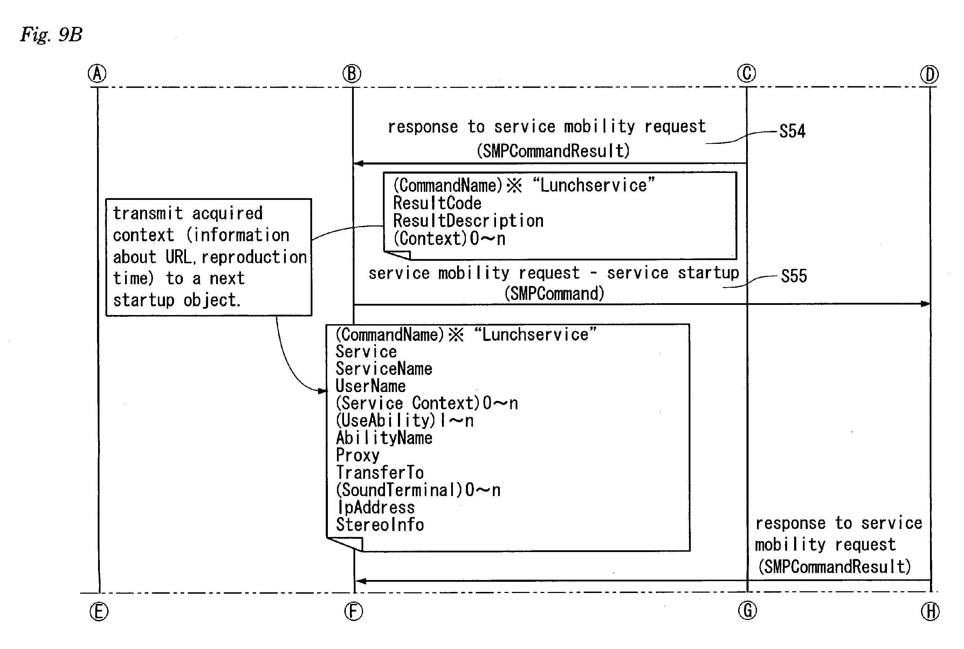

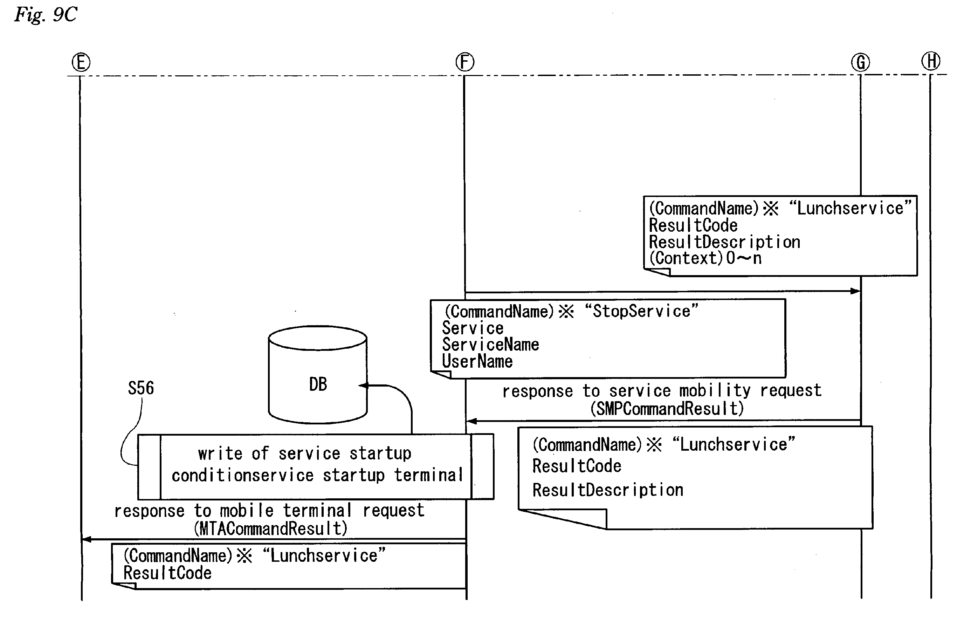

The hand off between fixed terminals which is a feature of the present invention will be described by showing its sequence in FIG. 9.
When user's operation occurs, the mobile terminal (20) sends a hand off request containing a terminal name of a transmission destination to the network server (10) (S51).
After referring to the management information database (11) (S52), a context acquisition request for inquiring a sender terminal (40a) of a context on service is sent thereto (S53).

Correspondingly, the sender terminal (40a) sends a service context (URL being reviewed and reproduction time) to the network server (S54).
The network server (10) sends service startup request (S55) as well as this information to a transmission destination terminal (40b).
Following procedure is the same as the startup procedure described above and the network server (10) records stop of a service at the sender terminal (40a) and startup of service at the transmission destination terminal (40b) in the database (S56).

The present invention can provide a configuration for peer-to-peer communication between mobile PCs as well as the above-described matters. That is, communication by SIP (session initiation protocol) which negotiates over exchange and communication of a subscription request signal between terminals is carried out.
The SIP communication will be described in detail. The network server (10) is equipped with the SIP relay processing unit (16) and the mobile terminal (20) is provided with the SIP client processing unit (24).

The SIP relay processing unit (16) acts as a mere relay server when known communication with the SIP is carried out using the basic access network, so that direct voice / image communication can be executed between the terminals. Regarding operations of each processing unit, a sequence of each of three cases about transmission from the mobile PC, signal arrival to the mobile PC and communication hand off is shown.

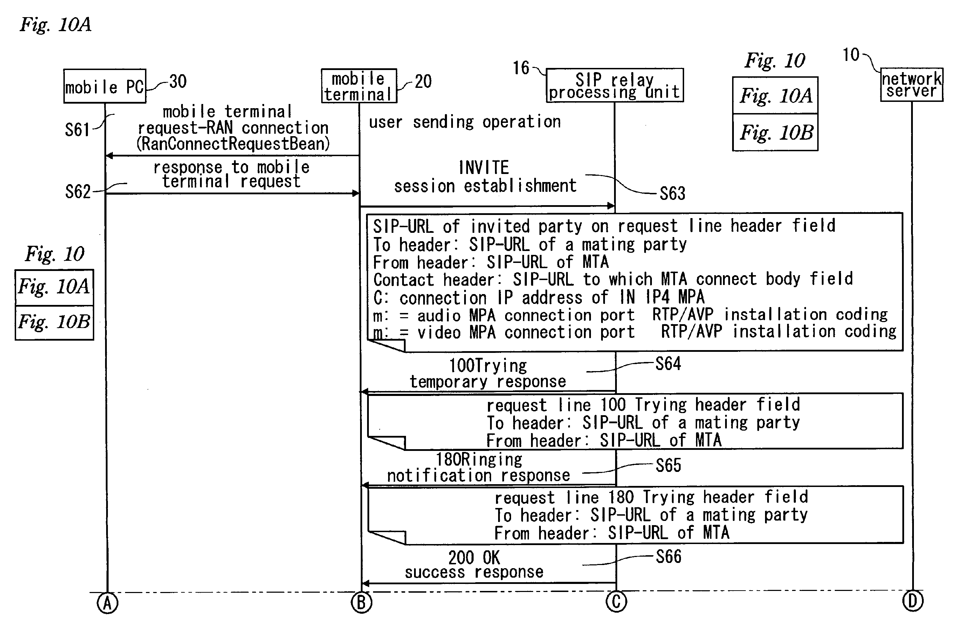

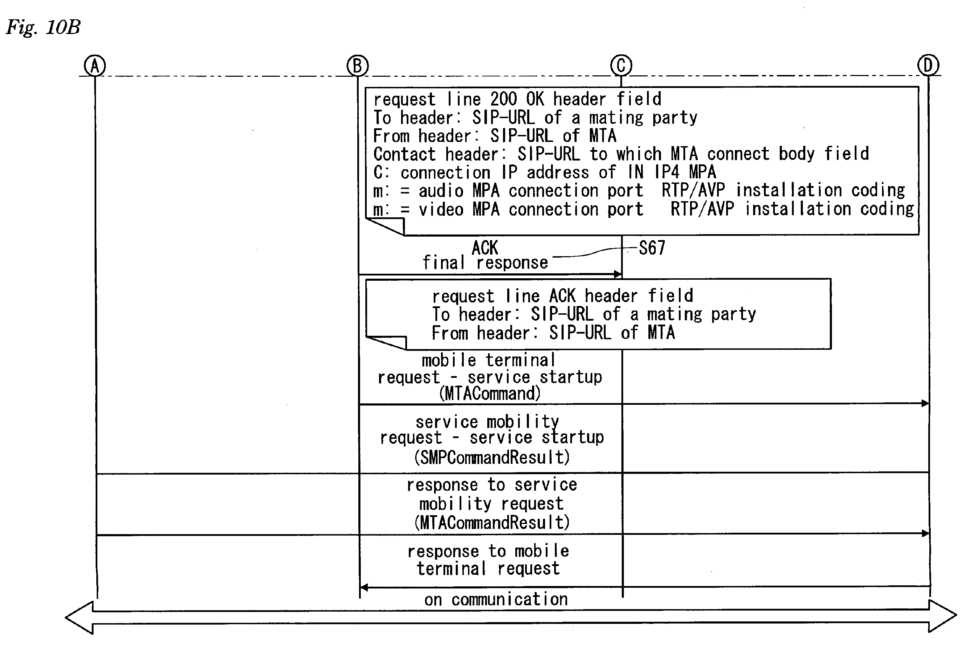

When user wants the SIP communication in FIG. 10, if he operates for transmission on the mobile terminal (20), the mobile terminal (20) requests the mobile PC (30) for RAN (radio access network) through the PAN (S61). In the meantime, in the present invention, wireless communication terminal does not always have to use wireless network as an access network but it will be called RAN connection because at least it has a configuration of always executing wireless communication.
The RAN connection is carried out by selecting an optimum RAN from position information from the mobile terminal and notifying the mobile PC (30) thereof. As this selection method, any technology disclosed in the above-mentioned patent documents 1 to 3 may be used.

The mobile PC sends back a response (S62) to a connection request after the RAN connection. After receiving this, the SIP client processing unit (24) of the mobile terminal (20) sends a session establishment request (S63) to the SIP relay processing unit (16). This includes a variety of information such as callee SIP?URI specified by user and URI of the mobile terminal.
When the SIP relay processing unit (16) receives a temporary response from a mobile terminal which is a transmission destination, it sends back the temporary response to the mobile terminal (S64), and if a mobile terminal and a mobile PC are connected to each other through RAN so as to respond, a communication response is sent back through the SIP relay processing unit (16) (S65).

When user operates for response at a transmission destination, a success response (S66) is sent back through the SIP relay processing unit (16) and correspondingly, a final response (S67) is sent from the mobile terminal (20).
The mobile terminal makes service startup request to the basic access network server processing unit (12) of the network server (10) (S68) to start up a transmission destination. Following procedure is the same as the above-described service startup sequence, so that communication is enabled between the both mobile PCs (30).

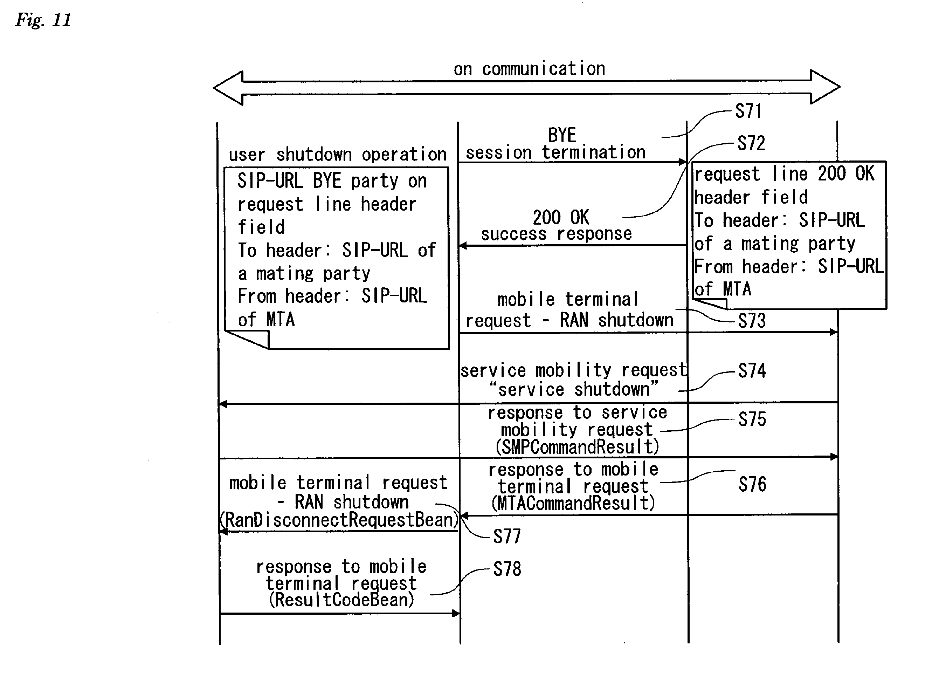

A sequence of communication shutdown after communication ends is as shown in FIG. 11. When user executes shutdown operation on the mobile terminal (20), a session termination request (S71) is sent to the SIP relay processing unit (16).
When the mobile terminal at a transmission destination sends back a success response, a response arrives at the mobile terminal (20) through the SIP relay processing unit (16) (S72). After the arrival, the mobile terminal (20) requests the network server (10) to stop the service (S73) and after that, stop sequence is executed.

Further, service stop is sent as the service mobility request from the network server (10) to the mobile PC (30) (S74) and after a response (S75), a response to the request for service stop is sent to a mobile terminal (S76).
The mobile terminal (20) which receives this instructs to shut down the RAN by the PAN (S77). In the mobile PC, the RAN connection is shut down so that those communication devices turn to sleep state.
Finally, the communication is ended through a response (S78) .

Although the receiving procedure is omitted because it falls under a sending destination of the aforementioned sending procedure, the mobile PC, the mobile terminal, the SIP relay processing unit and network server operate cooperatively.
Next, the hand off of the SIP communication will be described. This is technology for taking over communication from a hand off terminal on hold to a hand off destination terminal.

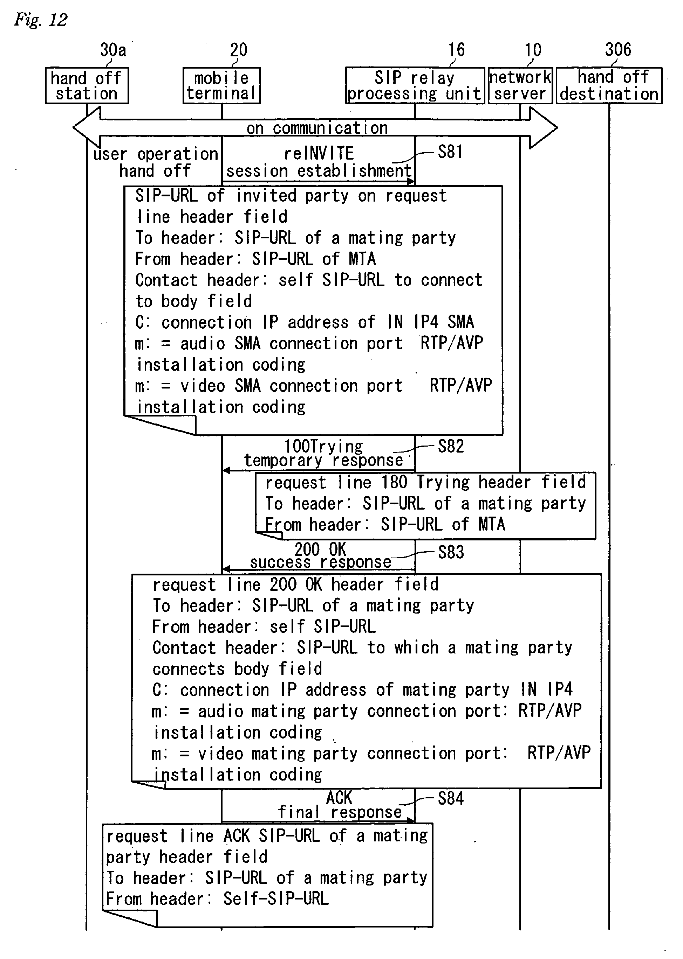

As shown in FIG. 12, first of all, the hand off terminal (30a) is on hold.
When the hand off operation is carried out on the user mobile terminal, the mobile terminal (20) sends a request for establishing a session again is sent to the SIP relay processing unit (16) and a temporary response (S82) and a success response (S83) are received from a hand off destination.

After a final response (S84) is sent after receiving this, the mobile terminal (20) sends a service startup request to the network server (10) to request for startup of the service of hand off destination. After that, service startup processing is carried out from the network server (10) to the hand off destination and when it ends, a response (S86) is sent back to the mobile terminal.

The hand off of the SIP communication is realized by the above sequence.
At the same time, the mobile terminal (20) sends a service stop request (S87) to the network server and correspondingly, a service stop request (S88) is sent to the hand off station mobile PC (30a) . A following procedure is the same as ordinary communication shutdown.

Although the present invention is comprised of the network service, mobile terminal and mobile PC as its minimum configuration, a variety of services can be provided by loading a processing function concerning the above shown service mobility and processing function concerned with the SIP communication. Because switching of the access network and the service hand off are integrated using the service hand off, preferably, user may use various terminals by carrying this.

## Claims

1. A wireless communication system capable of establishing connection of basic access network capable of signaling communication concerned with continuous communication switch control and access network for carrying out other data communication than the signaling communication, at the same time, using at least two or more kinds of communication networks including wireless communication network, the wireless communication system including wireless communication terminal, basic access network terminal and network server, wherein the wireless communication terminal includes:
access communication processing unit capable of communication with at least two or more kinds of communication networks including the wireless communication network; each network device corresponding to each communication network; a passage and device for communication with the basic access network terminal; and basic access network client processing unit having client function in signaling communication concerning connection / disconnection processing request to at least the access network obtained through the communication passage,
the network server includes:
management information database having user information and device information concerning the basic access network terminal; and basic access network server processing unit which controls the signaling communication concerning communication control containing registration/ updating processing of at least the basic access network terminal with the basic access network terminal when switching communication of the access network continuously, and
the basic access network terminal includes basic access network signaling processing unit which carries out the signaling communication with the basic access network server processing unit of the network server and the basic access network client processing unit at the wireless communication terminal and device control unit which at least controls the communication device.

2. The wireless communication system according to claim 1 wherein the network server has a packet relay processing unit which is capable of communicating with the wireless communication terminal using the access network and relays data stream packet to be sent to a wireless communication terminal, and
the wireless communication terminal has a seamless signal processing unit for receiving a packet through a packet relay processing unit of network server at the time of communication of the access network and switches the communication continuously on IP level.

3. The wireless communication system according to claim 1 or 2 further comprising: service control communication unit for communicating with the basic access network server processing unit of the network server; and service relay processing unit which, when communicating arbitrary service information such as sound and image in the wireless communication system, relays the information with a service providing terminal which starts up the service, in the network server,
wherein the service relay processing unit sets up service providing terminal database which holds information of the service providing terminal, application at least for use with reference to the service providing terminal database / parameter / communication method to be conveyed to the application and communicates control information to the service providing terminal based on a request concerning at least startup / stop / relay of the service obtained by the service control communication unit.

4. The wireless communication system according to claim 1 or 2 further including a service relay terminal provided with service control communication unit which communicates with the basic access network server processing unit of the network server and service relay processing unit which, when communicating arbitrary service information such sound and image in the wireless communication system, relays the information with a service providing terminal which starts up the service,
wherein the service relay processing unit sets up service providing terminal database which holds information of the service providing terminal, application at least for use with reference to the service providing terminal database / parameter / communication method to be conveyed to the application and communicates control information to the service providing terminal based on a request concerning at least startup / stop / relay of the service obtained by the service control communication unit.

5. The wireless communication system according to any of claim 1 to 4 wherein a configuration for communication based on SIP (Session Initiation Protocol) which carries out exchange of subscription request signal and negotiation about communication with wireless communication terminal and other terminal using the wireless communication system is provided with SIP client processing unit for sending position information to be acquired from position information acquisition unit controlled by at least the device control unit and signaling information acquired from the basic access network signaling processing unit, the SIP client processing unit being provided at the basic access network terminal, and SIP relay processing unit which transmits each information to the SIP client processing unit of other terminal.

6. The wireless communication system according to any of claim 1 to 5 wherein the basic access network terminal and the wireless communication terminal are constructed integrally and the communication passage is connected directly inside.

7. A network server used in a wireless communication system capable of establishing connection of basic access network capable of signaling communication concerned with continuous communication switch control and access network for carrying out other data communication than the signaling communication, at the same time, using at least two or more kinds of communication networks including wireless communication network, the wireless communication system including wireless communication terminal, basic access network terminal and network server,
the network server comprising management information database having user information and device information concerning the basic access network terminal and basic access network server processing unit which controls signaling communication concerning communication control containing registration / updating processing of at least the basic access network terminal with the basic access network terminal when switching communication of the access network continuously.

8. The network server according to claim 7 wherein the network server has a packet relay processing unit which is capable of communicating with the wireless communication terminal using the access network and relays a data stream packet to be sent to the wireless communication terminal.

9. The network server according to claim 7 or 8 further including service control communication unit which communicates with the basic access network server processing unit of the network server and service relay processing unit which, when communicating arbitrary service information such as sound and image in the wireless communication system, relays the information with a service providing terminal which starts up the service,
wherein the service relay processing unit sets up service providing terminal database which holds information of the service providing terminal, application at least for use with reference to the service providing terminal database / parameter to be conveyed to the application / communication method and communicates control information to the service providing terminal based on a request concerning at least startup / stop / relay of the service obtained by the service control communication unit.

10. A basic access network terminal used in a wireless communication system capable of establishing connection of basic access network capable of signaling communication concerned with continuous communication switch control and access network for carrying out other data communication than the signaling communication, at the same time, using at least two or more kinds of communication networks including wireless communication network, the wireless communication system including wireless communication terminal, basic access network terminal and network server,
the basic access network terminal including basic access network signaling processing unit which carries out the signaling communication with the basic access network server processing unit of the network server and the basic access network client processing unit at the wireless communication terminal and device control unit which at least controls the communication device.

11. The basic access network terminal according to claim 10 wherein a configuration for communication based on SIP (Session Initiation Protocol) which carries out exchange of subscription request signal and negotiation about communication with wireless communication terminal and other terminal using the wireless communication system is provided with SIP client processing unit for sending position information to be acquired from position information acquisition unit controlled by at least the device control unit and signaling information acquired from the basic access network signaling processing unit.

12. The basic access network terminal according to claim 10 or 11 wherein the wireless access network terminal is provided with a wireless communication terminal integrally, the wireless communication terminal comprising access communication processing unit capable of communicating with at least two or more kinds of communication networks including wireless communication network, each network device corresponding to each communication network, passage and device for communication with the basic access network terminal, and basic access network client processing unit having client function in signaling communication concerning connection disconnection processing request to at least the access network to be obtained through the communication passage.

13. The basic access network terminal according to any of claim 10 to 12 wherein the basic access network is formed of mobile phone or PHS network and the basic access network terminal is loaded on the mobile phone or PHS terminal.
